# EUROPÄISCHE PATENTANMELDUNG

(11) **EP 1 515 055 A1**
(43) Veröffentlichungstag der Anmeldung: **16.03.2005**
(21) Anmeldenummer: 04021902.4
(22) Anmeldetag: 15.09.2004
(51) Int. Cl.: F16B 41/00

(54) **Vorrichtung zum Sichern eines gegenüber einem Bauteil beweglichen Konstruktionselementes**

(30) Priorität: 15.09.2003 DE 10342481
(71) Anmelder: WEVO-Tech GmbH, 65817 Eppstein-Bremthal (DE)
(72) Erfinder: Ernst, Guido, 65817 Eppstein-Bremthal (DE)
(74) Vertreter: Müller, Eckhard, Dr.

(57) **Zusammenfassung**

Es wird eine Vorrichtung zum Sichern eines gegenüber einem Bauteil (5) beweglichen Konstruktionselementes (6), wie beispielsweise Schraube, Welle, Stift, Achse und dergleichen, gegen ungewolltes Lösen oder Öffnen beschrieben. Dabei ist ein mit dem Konstruktionselement (6) zusammenwirkendes Schließwerk (4) vorgesehen, das an einem das Konstruktionselement (6) im wesentlichen abdeckenden Gehäuse angeordnet ist. Mit dem Konstruktionselement (6) ist ein Zwischenelement (1) verbindbar, das mit dem Schließwerk (4) zusammenwirkt. Das Zwischenelement (1) weist dabei eine Ringnut (9) auf, in welche ein Riegel (2) des Schließwerks (4) in Schließstellung einschwenkbar ist.

## Beschreibung

Die Erfindung bezieht sich auf eine Vorrichtung zum Sichern eines gegenüber einem Bauteil beweglichen Konstruktionselementes, wie beispielsweise Schraube, Welle, Stift, Achse und dergleichen, gegen ungewolltes Lösen oder Öffnen, mit einem mit dem Konstruktionselement zusammenwirkenden Schließwerk, das an einem das Konstruktionselement im wesentlichen abdeckenden Gehäuse angeordnet ist, und mit einem mit dem Konstruktionselement verbindbaren Zwischenelement, das mit dem Schließwerk zusammenwirkt.

Bei den bisher bekannten Schrauben mit Verdrehsicherung handelt es sich stets um Spezialschrauben. So ist in dem Katalog "Zylinderschlösser für den Metallbereich" der DOM-Werbeabteilung, 1983, Seite 53, eine Schraubensicherung dargestellt, wobei der Schraubenkopf einen Außensechskant zum Ansetzen des Werkzeuges und eine Innenbohrung aufweist, in welche ein Schließzylinder einsetzbar ist. Mit dem Schließzylinder ist eine den Außensechskant abdeckende Zylinderhülse verbunden, welche ein Ansetzen eines Schlüsselwerkzeuges verhindert. Zusätzlich ist die Zylinderhülse in Schließstellung des Schließzylinders drehbar bezüglich des Schraubenkopfes gelagert, so dass auch keine Rohrzange oder dergleichen Werkzeug angesetzt werden kann.

Nachteilig bei dieser Sicherung ist jedoch, dass nur Spezialschrauben verwendet werden können. Denn der Schraubenkopf und die Zylinderhülse mit Schließzylinder müssen exakt aufeinander abgestimmt sein, so dass eine Verwendung der Zylinderhülse mit Schließzylinder bei anderen Schrauben anderer Größen nicht möglich ist.

Aus der FR 933523 A ist eine Vorrichtung der eingangs genannten Art bekannt mit einer Schraubenmutter, zu deren Sicherung ein Gehäuse über der Schraubenmutter angeordnet wird, so dass die Schraubenmutter durch das Gehäuse abgedeckt ist. Das Gehäuse weist eine mit einer Nut der Schraubenmutter korrespondierende Nut auf, in der ein offener Kreisring gehalten ist, der sich mit seinen Enden an dem Gehäuse abstützt. Das eine Ende dieses Kreisringes kann dabei mittels eines in dem Gehäuse angeordneten Schließmechanismus belastet werden, so dass sich der Kreisring zum Teil aus der Nut des Gehäuses in die Nut der Schraubenmutter verschiebt. Da der Kreisring aufgrund der Geometrie jedoch nicht vollständig in die Nut der Schraubenmutter einführbar ist, ist ein ungewolltes Lösen oder Öffnen der Schraubenmutter nicht möglich, da das Gehäuse aufgrund des zum Teil in der Nut der Schraubenmutter und der Nut des Gehäuses aufgenommenen Kreisrings nicht mehr von der Schraubenmutter abnehmbar ist.

Auch bei dieser Vorrichtung muss die abzudeckende Schraubenmutter auf das Gehäuse, den Zentrierring beziehungsweise die Nut des Gehäuses und auch auf das Schraubengewinde abgestimmt sein. Eine Verwendung der Vorrichtung bei Schraubenmuttern anderer Größen ist auch hier nicht möglich.

Aufgabe der vorliegenden Erfindung ist es daher, eine Vorrichtung gemäß dem Oberbegriff des Patentanspruchs 1 zu Verfügung zu stellen, mit der serienmäßig hergestellte Konstruktionselemente, wie beispielsweise Schrauben, Wellen, Stifte, Achsen und dergleichen, gegen ungewolltes Lösen oder Öffnen gesichert werden können.

Diese Aufgabe wird nach der Erfindung im wesentlichen dadurch gelöst, dass das Zwischenelement eine Ringnut aufweist, in welche ein Riegel des Schließwerkes in Schließstellung einschwenkbar ist.

Dadurch, dass das Zwischenelement eine Ringnut aufweist, in welche ein Riegel des Schließwerkes in Schließstellung einschwenkbar ist, ist gewährleistet, dass beispielsweise eine Vielzahl gängiger Schrauben mit einen oder demselben Zwischenelement gegen ungewolltes, unbefugtes oder auch gegen mutwilliges Lösen oder Öffnen gesichert werden können.

Nach einer ersten vorteilhaften Ausgestaltung der Erfindung ist das Zwischenelement koaxial bezüglich der Drehachse des beweglichen Konstruktionselementes und das Schließwerk seitlich versetzt dazu an dem Gehäuse angeordnet. Hierdurch lässt sich die erfindungsgemäße Sicherung für verschiedene Konstruktionselemente einsetzen, indem das Zwischenelement beispielsweise in Art einer Unterlegscheibe auf dem Schraubenschaft aufgeschoben wird. Der Schließzylinder ist seitlich versetzt dazu am Gehäuse angeordnet, so dass auch der Schließmechanismus unabhängig von dem jeweiligen Konstruktionselement ist.

Nach einer weiteren vorteilhaften Ausgestaltung der Erfindung ist das Gehäuse in Sicherungsstellung drehbar auf dem Zwischenelement gelagert. Da das Gehäuse nicht positionsfest gegenüber dem Bauteil angeordnet ist, ist ein unbefugtes oder auch mutwilliges Öffnen der Sicherung nochmals erschwert.

Um ein Verkippen des Gehäuses gegenüber dem Zwischenelement zu verhindern, und damit auszuschließen, dass ein Werkzeug in einen durch die Kippbewegung entstehenden Spalt zwischen Gehäuse und Bauteil einsetzbar ist, weist das Zwischenelement kreissegmentförmige Stege auf, an welchen das Gehäuse mit einer zylinderförmigen Ausnehmung gelagert ist.

Vorteilhafterweise überragen diese Stege das Konstruktionselement, so dass eine noch bessere Lagerung ohne die Möglichkeit eines Verkippens des Gehäuses gegeben ist.

Nach einer weiteren vorteilhaften Ausgestaltung der Erfindung ist das Zwischenelement ringförmig ausgebildet und auf einem Schaft-, Wellen- oder Achsenabschnitt des Konstruktionselementes mit einer Bohrung aufschiebbar.

Nach einem weiteren Gedanken der Erfindung ist bei Ausbildung des Konstruktionselementes als Schraube das Zwischenelement auf dem Schaft des Schraubbolzens aufschiebbar und zwischen Schraubenkopf und Bauteil eingespannt. Dadurch ist eine sichere Fixierung des Zwischenelementes erreicht. Das Gehäuse wird auf das Zwischenelement aufgesetzt und deckt dabei den gesamten Schraubenkopf ab. Das Gehäuse sitzt auf dem Bauteil auf und ist in Schließstellung drehbar um die Drehachse der Schraube gelagert.

Bei Ausbildung des Konstruktionselementes als Welle oder Achse kann das Zwischenelement auch durch einen Einstich in der Welle beziehungsweise Achse selbst gebildet sein, in welchen der Riegel des Schließwerkes einschwenkbar ist. Durch diese Maßnahme ist kein gesondertes Zwischenelement mehr notwendig.

Nach einem weiteren vorteilhaften Gedanken der Erfindung deckt das Gehäuse sowohl das Schließwerk mit Riegel als auch das gegenüber dem Bauteil vorstehende Konstruktionselement mit Zwischenelement ab. Das Konstruktionselement ist damit nicht mehr direkt zugänglich, so dass ein mutwilliges und unbefugtes Öffnen beziehungsweise Lösen des Konstruktionselementes von dem Bauteil nochmals erschwert ist. Erst nach Entfernen der erfindungsgemäßen Vorrichtung lässt sich das Konstruktionselement mit einem handelsüblichen Werkzeug lösen beziehungsweise öffnen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

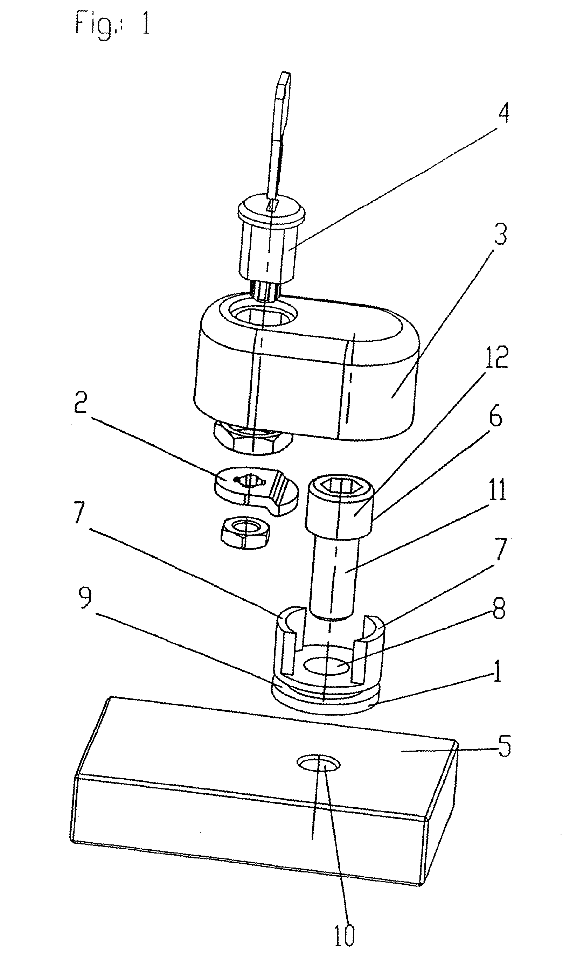

- Figur 1: eine perspektivische Ansicht der erfindungsgemäßen Vorrichtung in Art einer Explosionsdarstellung,
- Figur 2: die erfindungsgemäße Vorrichtung gemäß Figur 1 in einer Schnittdarstellung und
- Figur 3: die Einzelteile der erfindungsgemäßen Vorrichtung.

Die in den Figuren dargestellte Vorrichtung dient zum Sichern einer an einem Bauteil 5 eingeschraubten Schraube 6 gegen ein ungewolltes Lösen oder gegebenenfalls gegen Überdrehen der Schraube 6. Hierfür ist auf dem Schraubenschaft 11 ein ringförmiges Zwischenelement 1 mit einer Bohrung 8 aufgeschoben. Schraubenkopf 12 mit Zwischenelement 1 sind in der Sicherungsstellung der Vorrichtung von einem Gehäuse 3 abgedeckt. In dem Gehäuse 3 befindet sich seitlich versetzt zum Zwischenelement 1 ein als Schließzylinder ausgebildetes Schließwerk 4, welches mit einem Riegel 2 in Sperrstellung in eine Ringnut 6 des Zwischenelementes 1 eingreift beziehungsweise einschwenkbar ist.

Bei der Montage der Sicherung wird die Schraube 6 mit auf dem Schraubenschaft 11 aufgeschobenen Zwischenelement 1 in das

Gewinde 10 des Bauteils 5 eingeschraubt. Das Zwischenelement 1 ist dabei zwischen dem Bauteil 5 und dem Schraubenkopf 12 eingespannt und damit fixiert. In diesem Zustand lässt sich die Schraube 6 jedoch noch mittels eines Werkzeuges lösen.

Um dies zu verhindern, wird das Gehäuse 3 auf die Schraube 6 mit Zwischenelement 1 aufgeschoben. Vorteilhafterweise sitzt dabei der untere Rand des Gehäuses 3 auf dem mit der Schraube 6 verbundenen Bauteil 5 auf, derart dass kein Spalt vorhanden ist. Zusätzlich sind an dem Zwischenelement 1 kreissegmentförmige Stege 7 angeordnet, die in Schließstellung in das Gehäuse 3 hineinragen und für eine Lagerung der zylindrischen Gehäuseausnehmung 13 sorgen. Hierdurch ist ausgeschlossen, dass ein Werkzeug angesetzt und das Gehäuse 3 von der zu sichernden Schraube 6 abgehebelt werden kann. Der nun koaxial zu dem Zwischenelement 1 angeordnete Schließzylinder 4 ermöglicht es, den Riegel 2 aus einer Öffnungsstellung in eine Schließstellung zu verschwenken, wobei der Riegel 2 in eine Ringnut 9 des Zwischenelementes 1 eingreift.

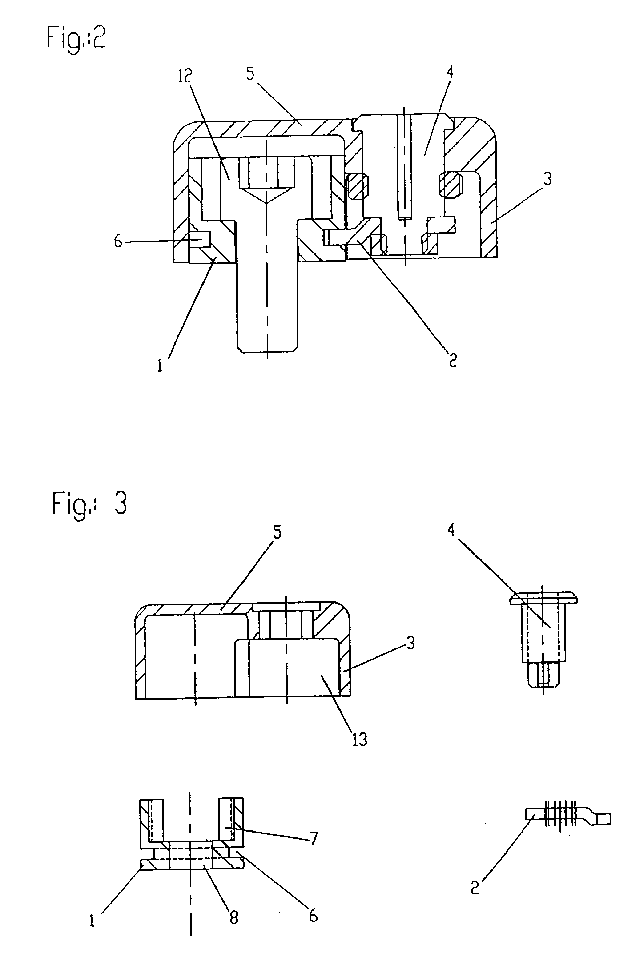

Dieser Zustand ist in der Schnittdarstellung der Figur 2 dargestellt, jedoch ohne das Bauteil 5 und die Schraube 6.

In der Schließstellung ist das Gehäuse 3 um die Drehachse der Schraube 6 drehbar. Hierdurch kann das Gehäuse 3 einem äußeren Krafteintrag in Drehrichtung ausweichen, so dass insoweit kaum Angriffsflächen für ein mutwilliges Entfernen des Gehäuses 3 von der Schraube 6 gegeben sind.

### Bezugszeichenliste

- 1 -: Zwischenelement
- 2 -: Riegel
- 3 -: Gehäuse
- 4 -: Schließwerk
- 5 -: Bauteil
- 6 -: Konstruktionselement, Schraube
- 7 -: Steg
- 8 -: Bohrung
- 9 -: Ringnut
- 10 -: Gewinde
- 11 -: Schraubenschaft
- 12 -: Schraubenkopf
- 13 -: Ausnehmung

## Patentansprüche

1. Vorrichtung zum Sichern eines gegenüber einem Bauteil (5) beweglichen Konstruktionselementes (6), wie beispielsweise Schraube, Welle, Stift, Achse und dergleichen, gegen ungewolltes Lösen oder Öffnen, mit einem mit dem Konstruktionselement (6) zusammenwirkenden Schließwerk (4), das an einem das Konstruktionselement(6) im wesentlichen abdeckenden Gehäuse (3) angeordnet ist, und mit einem mit dem Konstruktionselement (6) verbindbaren Zwischenelement (1), das mit dem Schließwerk (4) zusammenwirkt, **dadurch gekennzeichnet, dass** das Zwischenelement (1) eine Ringnut (9) aufweist, in welche ein Riegel (3) des Schließwerkes (4) in Schließstellung einschwenkbar ist.

2. Vorrichtung nach Anspruch 1, **dadurch gekennzeichnet, dass** das Zwischenelement (1) koaxial bezüglich der Drehachse des beweglichen Konstruktionselementes (6) und das Schließwerk (4) seitlich versetzt dazu an dem Gehäuse (3) angeordnet ist.

3. Vorrichtung nach Anspruch 1 oder 2, **dadurch gekennzeichnet, dass** das Gehäuse (3) in Sicherungsstellung drehbar auf dem Zwischenelement (1) gelagert ist.

4. Vorrichtung nach einem der vorhergehenden Ansprüche, **dadurch gekennzeichnet, dass** das Zwischenelement (1) kreissegmentförmige Stege (7) aufweist, an welchen das Gehäuse (3) mit einer zylinderförmigen Ausnehmung (13) gelagert ist.

5. Vorrichtung nach einem der vorhergehenden Ansprüche, **dadurch gekennzeichnet, dass** das Zwischenelement (1) ringförmig ausgebildet und mit einer Bohrung (8)auf einem Schaft-, Wellen- oder Achsenabschnitt des Konstruktionselementes (6) aufschiebbar ist.

6. Vorrichtung nach einem der vorhergehenden Ansprüche, **dadurch gekennzeichnet, dass** bei Ausbildung des Konstruktionselementes als Schraube (6) das Zwischenelement (1) auf einem Schaft (11) des Schraubbolzens (6) aufschiebbar und zwischen Schraubenkopf (12) und Bauteil (5) eingespannt ist.

7. Vorrichtung nach einem der Ansprüche 1 bis 7, **dadurch gekennzeichnet, dass** bei Ausbildung des Konstruktionselementes (6) als Welle oder Achse das Zwischenelement (1) von einem Einstich in der Welle beziehungsweise Achse gebildet ist, in welche der Riegel (2) des Schließwerkes (4) einschwenkbar ist.

8. Vorrichtung nach einem der vorhergehenden Ansprüche, **dadurch gekennzeichnet, dass** das Gehäuse (3) sowohl das Schließwerk (4) mit Riegel (2) als auch das gegenüber dem Bauteil (5) vorstehende Konstruktionselement (6) mit Zwischenelement (1) abdeckt.
